# FASCICULE DE BREVET EUROPEEN

(11) **EP 1 581 703 B1**
(45) Date de publication et mention de la délivrance du brevet: **09.03.2011**
(21) Numéro de dépôt: 04700466.8
(22) Date de dépôt: 07.01.2004
(51) Int. Cl.: E02B 17/00, F03D 1/00, F03D 11/04

(54) **PROCEDE D'INSTALLATION EN MER D'UN EOLIENNE**
VERFAHREN ZUR OFFSHORE-MONTAGE EINER WINDTURBINE
METHOD FOR OFFSHORE INSTALLATION OF A WIND TURBINE

(30) Priorité: 09.01.2003 FR 0300172
(43) Date de publication de la demande: 05.10.2005
(73) Titulaire: SAIPEM S.A., 78180 Montigny-le-Bretonneux (FR)
(72) Inventeur: FARGIER, Cyrille, 92400 Courbevoie (FR); GOALABRE, Jean-Yves, 13008 Marseille (FR)
(74) Mandataire: Domange, Maxime
(86) Numéro de dépôt international: PCT/FR2004/000012
(87) Numéro de publication internationale: WO 2004/070119

(56) Documents cités:
- WO-A-02/48547
- GB-A- 2 365 905

## Description

La présente invention est relative aux éoliennes installées au large des côtes, en particulier en mer.

Plus particulièrement, le domaine technique de l'invention est celui de la fabrication, du transport et de l'installation d'éoliennes de production d'énergie électrique, plus particulièrement d'éoliennes offshore de très grande capacité, destinées à être installées en mer, plus particulièrement au large des côtes et en grand nombre, pour former des champs d'éoliennes.

Alors que des moteurs à vent terrestres sont construits depuis plusieurs siècles, la construction d'éoliennes en mer est beaucoup plus récente.

Une éolienne moderne, tant terrestre que marine, comporte généralement un moteur à plusieurs pales et à axe horizontal, ainsi qu'un générateur électrique accouplé au moteur, qui sont fixés à l'extrémité supérieure d'un support allongé verticalement tel qu'un mât ou pylône.

Dans le but de diminuer le coût de l'énergie éolienne et d'augmenter le rendement des générateurs, on fabrique des générateurs de plus en plus puissants que l'on installe dé façon groupée pour former un champ ou ferme éolien(ne).

L'augmentation de la puissance d'un générateur éolien s'accompagne notamment d'une augmentation de sa masse ainsi que de la hauteur de la structure le supportant.

Pour des raisons économiques, on est conduit à mettre en oeuvre des éoliennes de plus en plus puissantes et donc de plus en plus grandes dimensions, notamment de hauteur de plus en plus grande. De même, ces éoliennes sont installées à des distances de plus en plus éloignées des côtes et donc à des profondeurs de plus en plus grandes.

L'invention s'applique particulièrement, c'est-à-dire non limitativement, aux éoliennes comportant un générateur dont la puissance est située dans une plage allant de 100kW à 10 MW ; la masse d'un tel générateur peut atteindre ou dépasser 300 ou 500 tonnes ; la longueur d'un pylône supportant ce générateur peut être de l'ordre de 50 à 100 mètres, et la masse du pylône peut être située dans une plage allant de 100 à 500 tonnes.

On comprend donc que la construction de telles éoliennes et l'installation en mer présente de grandes difficultés.

On a proposé différentes solutions pour la construction et l'installation des éoliennes offshore.

Dans GB 2 365 905, on met en oeuvre une éolienne comportant un mât télescopique. Toutefois, dans ce brevet, on ne décrit pas comment l'éolienne est transportée et installée sur son site d'opération en mer et notamment comment son mât peut être déployé au niveau d'un site d'opérations au large des côtes.

De GB-A-2365905 est connu une éolienne comportant un pylône téléscopique.

Dans WO 01/34977, on décrit un procédé dans lequel !'éolienne est construite et entièrement montée à terre puis transportée par bateau sur son site d'opérations au large des côtes.

Cette dernière solution est la solution la plus répandue à ce jour.

De WO-A-02/48547 est connu (p.5/1.13-p.8/1.11, fig.46) un procédé d'installation en mer dune éolienne (10) comprenant un pylône (12) supportant a son sommet un moteur à vent (14), le procédé comprenant les étapes successives suivantes dans lesquelles:
- on transporte jusqu'à un site d'installation en mer ladite éolienne (10) sur une plateforme (20) flottante auto-élévatrice, ladite plateforme supportant également un dispositif (36)*de déplacement et de levage de l'éolienne (10) comprenant une tour mobile comprenant des moyens de levage aptes à saisir et déplacer verticalement ledit pylône (12), ledit site d'installation en mer de la dite éolienne (10) comprenant un pieu (42) de fondation installé au fond (29) de la mer et dont le sommet émerge au-dessus du niveau de l'eau (L2), et
- une fois arrivé a proximité dudit pieu (42) de fondation, on surélève ladite plateforme (20) auto-élévation par rapport au niveau de la mer et on lui assure une position fixe par rapport au sol marin, et
- on déplace à l'aide dudit dispositif (36) de déplacement et de levage ladite éolienne (10) jusqu'à ce que la base du pylône (12) soit dans l'axe dudit pieu (42) de fondation puis on solidarise la base dudit pylône (12) avec le sommet dudit pieu (42) de fondation.
* Le dispositif (36) comprends une grue mobile pour saisir et déplacer verticalement le pylône (12). La grue mobile est en outre apte à se déplacer sur la plateforme dans une direction horizontale.

La construction d'éolienne s'effectue en général à l'aide de moyens de levage par traction conventionnelle avec des engins de levage du type grue. On réalise l'assemblage d'une base surmontée d'un pylône au sommet duquel est fixé un moteur générateur.

Toutefois, les éoliennes une fois construites représentent de grandes dimensions et des charges importantes, de sorte que ces éoliennes ne sont pas faciles à transporter en mer sur leur site d'opérations.

D'autre part, on comprend que l'installation d'éolienne à l'aide de grues agissant par traction requiert des grues de grandes dimensions, et notamment d'une hauteur supérieure à celle de l'éolienne. Pour des éoliennes des dimensions mentionnées ci-dessus, il est nécessaire de mettre en oeuvre des grues d'au moins 350 tonnes munies de flèche de levage d'au moins 50, généralement de près de 100 m de long, de telles grues étant difficiles à monter et à déplacer, notamment à transporter en mer. On ne peut pas raisonnablement envisager de transporter de tels moyens de levage du type grue sur des barges flottantes, comme cela peut être le cas dans certaines opérations des champs pétroliers offshore, compte tenu de l'encombrement qu'elles représenteraient et de l'instabilité de la barge dans une mer agitée, et ce, aussi bien pendant le transport que pendant les opérations de levage.

Le but de la présente invention est donc de fournir un procédé de transport et d'installation en mer d'éolienne offshore qui soit amélioré ou qui remédie au moins en partie aux inconvénients des éoliennes et procédés d'installation connus à ce jour.

Plus particulièrement, la présente invention vise à faciliter l'installation d'une éolienne sur son site de production, en particulier sur un site immergé loin des côtes, proposant une éolienne plus simple à construire et à installer.

Pour ce faire, la présente invention fournit un procédé d'installation en mer d'une éolienne Selon la revendication 1.

Selon l'invention, on dissocie donc la fabrication et l'installation de la partie émergée de l'éolienne comprenant un pylône support du moteur générateur solidaire de son sommet, et la fabrication et l'installation d'un pieu de fondation coopérant éventuellement avec une embase au fond de la mer.

La mise en oeuvre d'un pylône télescopique en configuration rétractée facilite son transport sur son site de production en mer car la hauteur maximale requise pour les engins de levage est ainsi considérablement réduite. Elle facilite également le transport de l'éolienne entre un premier site sur lequel est effectué un assemblage de ses principaux éléments constitutifs qui peut être un site terrestre ou un site immergé à faible profondeur, et le deuxième site sur lequel l'éolienne est installée de façon définitive et qui peut être un site immergé à une profondeur plus importante. L'invention facilite également l'érection de l'éolienne sur le deuxième site de production d'énergie qui est obtenue en provoquant sur ce deuxième site un mouvement relatif des éléments tubulaires mobiles constitutifs du pylône de façon à faire passer ledit pylône de sa configuration rétractée jusqu'à sa configuration déployée.

Avantageusement, selon la présente invention, il n'est pas nécessaire que ledit pylône télescopique comporte des moyens assurant son érection depuis sa dite configuration rétractée jusqu'à sa dite configuration déployée puisque ceux-ci sont prévus dans ledit dispositif de déplacement et de levage supporté par la plateforme flottante auto-élévatrice.

Les plateformes flottantes auto-élévatrices sont bien connues de l'homme de l'art et seront décrites de façon plus détaillée ci-après.

Dans un mode préféré de réalisation ledit dispositif de déplacement et de levage comprend une tour mobile constituée d'une structure rigide à section horizontale en forme de U, apte à contenir ledit pylône entre les deux branches du U, et présentant une hauteur au moins égale à la hauteur dudit pylône télescopique en configuration rétractée et de préférence inférieure à la hauteur dudit pylône télescopique en configuration déployée.

Ainsi, la tour peut maintenir et stabiliser de façon optimale l'éolienne en position rétractée pendant son déplacement sur ladite plateforme auto-élévatrice, et également pendant les opérations de déploiement du pylône.

On entend par « tour mobile » que ladite tour comprend des moyens de déplacement de ladite tour sur ladite plateforme auto-élévatrice, et notamment ladite tour peut comprendre un châssis multi-roues sur laquelle elle repose, comme explicité ci-après.

De préférence aussi, ladite tour présente une hauteur inférieure à la hauteur de l'élément tubulaire de pylône inférieur de plus grand diamètre ajoutée à celle d'un autre élément tubulaire de pylône correspondant à l'autre élément tubulaire de pylône de plus grande longueur. Ce mode de réalisation permet de mettre en oeuvre une tour de hauteur réduite, ce qui est rendu possible par le procédé de déploiement dudit pylône télescopique en configuration déployée qui sera décrit ci-après.

Plus particulièrement, ledit dispositif de déplacement et de levage comprend des moyens de levage comprenant un chariot élévateur guidé verticalement par des rails de guidage supportés par ladite tour, ledit chariot élévateur pouvant se déplacer verticalement le long de ladite tour, ledit chariot élévateur supportant des moyens de préhension aptes à saisir ledit pylône télescopique.

Dans un mode préféré de réalisation, lesdits moyens de préhension sont aptes à saisir ledit pylône au niveau de la partie supérieure de chacun desdits éléments tubulaires de pylône, et ledit chariot élévateur est apte à être déplacé verticalement à l'aide de moyens de poussée hydraulique tels que des vérins, de façon à soulever ledit pylône ou de façon à déployer lesdits éléments tubulaires coaxiaux de pylône en les soulevant par poussée.

Plus particulièrement encore, lesdits moyens de préhension sont constitués par des coins mobiles pouvant se déplacer dans une direction horizontale, et aptes à soulever lesdits éléments tubulaires de pylône lorsque l'on déplace verticalement ledit chariot élévateur.

Dans une variante de réalisation, lesdits moyens de préhension viennent bloquer la paroi de la partie supérieure desdits éléments tubulaires à déployer.

Dans une autre variante de réalisation, lesdits moyens de préhension coopèrent avec une bride ou un collier périphérique au niveau de la partie supérieure dudit élément tubulaire de pylône à déployer, de manière à ce qu'il vienne buter en sous-face de ladite bride ou collier lorsque l'on déplace verticalement ledit chariot élévateur.

Dans une variante de réalisation, ledit pieu de fondation est mis en place par battage, forage ou fonçage. Dans une autre variante, ledit pieu de fondation comporte une embase gravitaire reposant sur le fond de la mer. Dans une autre variante encore, ledit pieu de fondation comporte une structure d'ancrage permettant son ancrage dans le fond de la mer.

Dans un mode de réalisation particulier du procédé selon l'invention, à l'étape 3), on réalise les opérations suivantes dans lesquelles :
a) on déplace ladite éolienne en configuration rétractée à l'aide dudit dispositif de déplacement et de levage jusqu'à atteindre une position où ledit pylône télescopique est dans l'axe dudit pieu de fondation et,
b) on descend ladite éolienne en configuration rétractée à l'aide dudit dispositif de déplacement et de levage jusqu'à ce que la base dudit pylône télescopique en configuration rétractée repose sur le sommet dudit pieu de fondation, et
c) on solidarise, de préférence par soudage ou boulonnage, la base dudit pylône sur le sommet dudit pieu de fondation, et
d) on déploie l'élément tubulaire supérieur de plus petit diamètre dudit pylône à l'aide desdits moyens de levage, lesdits moyens de levage coopérant avec ledit élément tubulaire supérieur de pylône au niveau de sa partie supérieure dépassant des autres dits éléments tubulaires de pylône dans lesquels ledit élément tubulaire supérieur est emboîté en configuration rétractée du pylône télescopique, et
e) on solidarise la base dudit élément tubulaire supérieur du pylône avec la partie supérieure d'un élément tubulaire intermédiaire ou de l'élément tubulaire inférieur, à l'intérieur duquel ledit élément tubulaire supérieur a coulissé pour être déployé, et
f) le cas échéant, on déploie ledit élément tubulaire intermédiaire de diamètre supérieur à l'intérieur duquel ledit élément tubulaire supérieur a coulissé, à l'aide desdits moyens de levage coopérant avec la partie supérieure dudit élément tubulaire intermédiaire en soulevant ainsi ledit élément tubulaire supérieur et ledit moteur à vent qui lui est solidaire, et
g) le cas échéant, on solidarise la base dudit élément tubulaire intermédiaire avec la partie supérieure d'un autre élément tubulaire intermédiaire de diamètre supérieur, à l'intérieur duquel ledit premier élément tubulaire intermédiaire a coulissé, et
h) le cas échéant, on réitère l'étape g) autant de fois qu'il y a d'éléments tubulaires intermédiaires constitutifs dudit pylône télescopique, et
i) on solidarise la base de l'élément tubulaire intermédiaire de plus grand diamètre avec la partie supérieure de l'élément tubulaire inférieur à l'intérieur duquel ledit élément tubulaire intermédiaire a coulissé.

On comprend qu'on entend ici par «éléments tubulaires intermédiaires» des éléments tubulaires intercalés entre :
- un élément tubulaire supérieur de plus petit diamètre, au sommet duquel est solidarisé le moteur avant, et
- un élément tubulaire inférieur de plus petit diamètre, apte à être fixé sur le sommet dudit pieu de fondation.

Avantageusement, lesdits éléments tubulaires intermédiaires de pylône comportent à leur extrémité supérieure un collier ou une bride périphérique, et lesdits moyens de levage soulèvent lesdits éléments tubulaires intermédiaires par poussage en sous-face de ladite bride ou dit collier à l'aide desdits moyens de préhension consistant en des coins mobiles à déplacement horizontal pouvant être engagés dessous ledit collier ou bride, et déplacés verticalement vers le haut par ledit chariot élévateur.

Les éléments tubulaires de pylône sont essentiellement métalliques, étant obtenus par assemblage bout à bout de tronçons cylindriques réalisés par roulage et soudage de tôles d'acier. De même, le pieu de fondation est réalisé de préférence en acier, mais peut être avantageusement préfabriqué en béton.

Les avantages du procédé selon l'invention sont les suivants :
1) l'éolienne est maintenue pendant toute la phase de transport et d'installation grâce à la tour de déplacement et de levage transportée sur la plateforme, alors que dans les systèmes avec grue, lesquels éléments sont soulevés par traction, il se produit des phénomènes de balancement lorsque lesdits éléments sont suspendus, sans structure de maintien.
2) le procédé selon l'invention permet une installation plus rapide, plus facile et plus fiable de l'éolienne que dans les procédés de la technique antérieure, et
3) le procédé selon l'invention met en oeuvre des engins de transport, de déplacement et de levage moins encombrants et plus rigides, et donc plus faciles à déplacer et plus faciles à contrôler pendant les opérations de transport et d'installation, que dans les procédés de la technique antérieure.

Il en résulte que le procédé selon l'invention peut permettre des installations d'éolienne en mer de distance éloignée des côtes et dans des profondeurs pouvant aller jusqu'à 100 m sans difficulté.

Elle permet aussi d'installer plus facilement des turbines de moteur à une altitude importante au dessus des flots, notamment supérieure à 100 m, ce qui permet d' accroître le diamètre du rotor et donc la puissance unitaire du moteur.

D'autres caractéristiques et avantages de la présente invention apparaîtront à la lumière de la description qui va suivre, qui se réfère aux dessins annexés et qui illustre sans aucun caractère limitatif des modes préférentiels de réalisation de l'invention.
La figure 1 représente une vue de face d'une éolienne offshore montée sur une embase monopieu de fondation enfoncée dans le fond de la mer.
Les figures 2 et 3 représentent en vue de face des embases respectivement de type embase gravitaire (fig.2) et embase à structure tripode (fig.3), destinées à recevoir des éoliennes offshore.
La figure 4 représente une vue de côté d'une plateforme auto-élévatrice 10 portant deux pylônes d'éolienne en configuration rétractée et un dispositif de déplacement et levage 20.
Les figures 5 et 6 représentent la plateforme auto-élévatrice 10 représentée en position haute respectivement en vue de côté (fig.5) et en vue de face (fig.6).
La figure 7 est une vue de côté de la plateforme auto-élévatrice 10, le dispositif de déplacement et levage 20 étant engagé autour de l'éolienne 1 prêt à effectuer le levage.
La figure 8 représente le support 22 du châssis multi-roues 23 à section horizontale en forme de U correspondant à la section en vue de plan relative au repère AA de la figure 7.
La figure 9 représente une section en vue de plan du chariot de levage 24 au niveau du repère BB de la figure 7.
La figure 10 représente une section en vue de plan du couronnement 28 de la tour de levage 21 au niveau du repère CC de la figure 7.
La figure 11 représente une vue de côté du dispositif de déplacement et levage 20 portant l'éolienne 1 et son pylône 3 positionné à la verticale d'un monopieu de fondation 4.
La figure 12 est une vue de face relative à la figure 11.
La figure 13 représente en vue de côté le dispositif de déplacement et levage 20 portant l'éolienne 1 et son pylône 3 en position déployée.
La figure 14 est une vue de face relative à la figure 13.
La figure 15 est une vue de face similaire à la figure 11 dans laquelle le pylône 3 est constitué de trois éléments tubulaires coulissants.

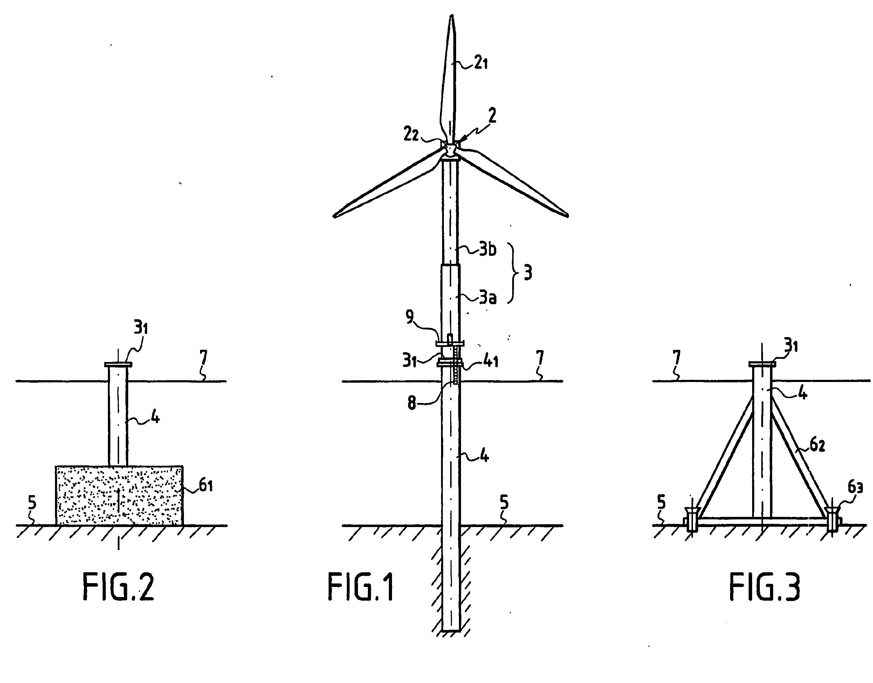

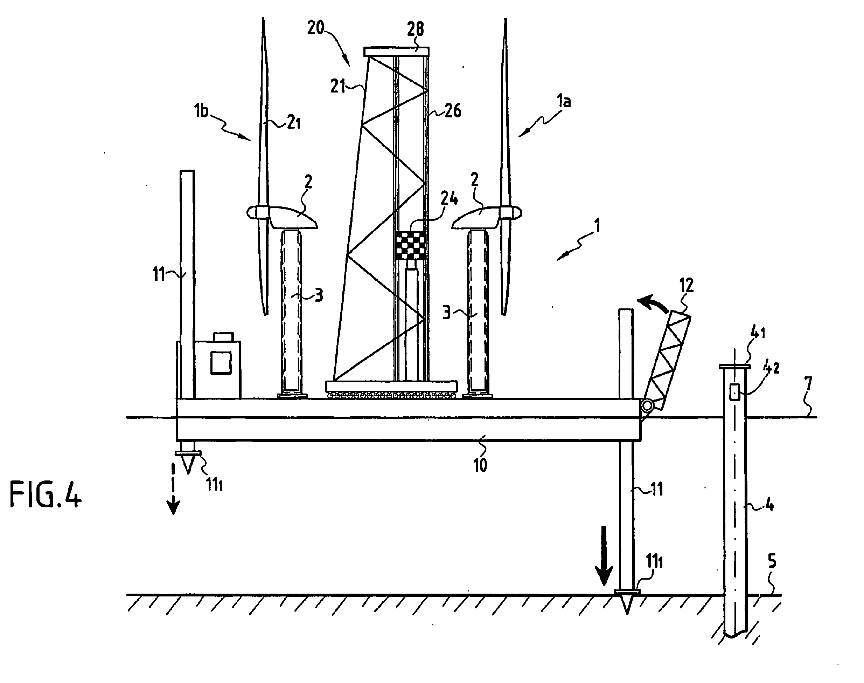

Sur la figure 1 on a représenté en vue de face une éolienne offshore 1 comportant un moteur à vent 2 comprenant une génératrice de courant, et un arbre rotatif 2₂ d'axe horizontal entraîné en rotation par ledit moteur 2 et supportant trois pales 2₁ à son extrémité. Ledit moteur 2 est installé au sommet d'un pylône télescopique 3 comprenant deux parties de forme allongée 3a et 3b mobiles l'une par rapport à l'autre, entre une configuration rétractée et une configuration déployée. Sur la figure 1 le pylône télescopique 3 est déployé. Le pylône 3 est constitué plus précisément d'un élément tubulaire inférieur 3a et d'un élément tubulaire supérieur 3b de diamètre externe inférieur au diamètre interne de l'élément tubulaire inférieur 3a. Les deux éléments tubulaires 3a et 3b du pylône peuvent coulisser l'un dans l'autre selon leur axe longitudinal commun sensiblement vertical, de façon connue, grâce à un système de guidage interne non représenté. Le pylône télescopique 3 est représenté en position rétractée sur les figures 4 à 7.

La partie active de l'éolienne est renfermée dans une nacelle 2 comprenant le moteur et la génératrice de courant ainsi que l'arbre rotatif 2₂, la nacelle étant solidaire du sommet de l'élément tubulaire supérieur 3b du pylône.

A titre d'exemple, l'éolienne offshore est constituée de :
- un moteur générateur de 100 tonnes,
- un pylône d'environ 3 m de diamètre et d'environ 90 m de longueur, pesant environ 250 tonnes.

Dans les modes de réalisation dans lesquels le pylône est composé de 2 demi-pylônes, celui-ci comprend plus particulièrement :
- un demi-pylône ou élément tubulaire supérieur 3b de 2,6 m de diamètre, 45 m de longueur en position déployée et d'un poids de 80 tonnes,
- un demi- pylône ou élément tubulaire inférieur 3a de 3,6 m de diamètre, sensiblement de même longueur et légèrement plus lourd que le demi-pylône supérieur.

Le pylône 3 repose sur une embase comprenant un pieu de fondation 4. Plus précisément le pieu de fondation 4 enfoncé au fond de la mer comprend à son sommet une platine 4₁ qui permet de solidariser notamment par boulonnage ou soudage une platine inférieure 3₁ à la base du pylône 3, donc à la base de la partie inférieure tubulaire 3a du pylône sur laquelle elle est posée.

Sur la figure 1 l'embase 4 sur laquelle est installée l'éolienne est constituée par un pieu de fondation 4 enfoncé par battage dans le sol marin 5.

Sur la figure 2, on a représenté des variantes de réalisation dans lesquelles le pieu de fondation 4 est encastré dans une embase gravitaire 6₁ reposant simplement sur le sol et stabilisant ainsi l'éolienne 1 de par le simple poids de l'embase gravitaire 6₁.

Sur la figure 3 le pieu 4 est soutenu par une structure tripode 6₂ ancrée 6₃ par des piles ou pieux, non représentés, enfoncés dans le sol marin 5.

Le pieu 4 de fondation a une hauteur telle que son sommet dépasse le niveau de la surface de l'eau 7 de quelques mètres, par exemple 8m. Ainsi, on met en oeuvre en général un pieu 4 de longueur totale au dessus du fond de la mer de 48 à 58m dans la mesure où de telles éoliennes peuvent être installées jusqu'à des profondeurs de 40 à 50 m. La fiche, ou longueur enfoncée dans le sol, dépend essentiellement de la nature dudit sol et peut varier de 15 à 25m pour des sols compacts, à 50-60m pour des sols moins résistants. Ces pieux sont en général installés par tronçons successifs, le premier tronçon étant d'une longueur correspondant à la profondeur d'eau additionnée de la hauteur libre sous le crochet de grue, puis, au fur et à mesure du battage, des longueurs complémentaires sont raboutées et solidarisées par soudage. En fin de battage, le pieu est alors coupé à la cote finale hors d'eau, puis la bride 4₁ est soudée en tête de pieu, ainsi que les corbeaux 4₂. La fondation est alors prête à recevoir le pylône équipé de son éolienne.

Sur la figure 1 on a représenté une échelle 8 fixée au sommet du pieu de fondation 4 permettant au personnel de monter depuis la surface de l'eau et accéder à une plateforme 9 située à une altitude suffisante pour être à l'abri des vagues et accéder au niveau d'une porte dans l'élément tubulaire inférieur 3a du pylône 3 lorsque celui-ci est installé sur le pieu de fondation 4.

Le pylône 3 peut comprendre un escalier interne d'accès à une plateforme de visite supérieure ou à la nacelle 2 supportant le moteur. La plateforme 9 peut aussi se situer à proximité du sommet de l'élément tubulaire inférieur 3a du pylône 3.

Selon la présente invention, on installe tout d'abord le pieu de fondation 4 par des techniques et moyens connus de l'homme de l'art. Puis on transporte une éolienne 1 comprenant un pylône 3, de préférence un pylône télescopique en position rétractée, sur une plateforme flottante auto-élévatrice 10 représentée sur les figures 4 à 15.

Sur la figure 4, la plateforme 10 supporte 2 éoliennes 1. En principe, celles-ci sont haubanées par des moyens non représentés. La plateforme 10 est dite « auto-élévatrice » car elle comporte des poteaux élévateurs 11, de préférence au moins 3 poteaux élévateurs 11 aptes à être descendus verticalement depuis le pont de la plateforme 10 jusqu'au fond de la mer 5 où ils peuvent reposer. Quand les poteaux d'élévation 11 sont enfoncés dans le sol marin, ils sont stabilisés par une platine inférieure 11₁, Des poteaux d'élévation 11 et la plateforme 10 peuvent se déplacer verticalement d'un mouvement relatif les uns par rapport à l'autre. Une fois que les poteaux d'élévation 11 sont entièrement descendus jusqu'au fond de la mer, ladite plateforme auto-élévatrice 10 peut ensuite être relevée au-dessus du niveau de la mer jusqu'à une altitude telle que l'altitude de son pont corresponde sensiblement à l'altitude de la platine supérieure 4₁ au sommet du pieu de fondation 4. Cette élévation de la plateforme auto-élévatrice se fait par un système de crémaillère ou de vérin non représenté, connu de l'homme de l'art, coopérant avec les poteaux d'élévation 11, de manière à créer un mouvement relatif de ladite plateforme par rapport aux poteaux d'élévation 11 fixes. Une fois en position relevée par rapport au niveau de la mer, la plateforme auto-élévatrice 10 est alors fixe par rapport au fond de la mer 5.

La plateforme auto-élévatrice 10 comporte une passerelle 12 qui peut être déplacée, notamment par pivotement autour d'un axe horizontal situé à une extrémité de ladite passerelle 12, de façon à ce que l'extrémité libre de la passerelle repose sur des corbeaux 4₂ disposés contre et autour du pieu d'embase 4 sous la platine supérieure 4₁ au sommet du pieu de fondation 4.

La plateforme 10 supporte également un dispositif de déplacement et de levage 20 comprenant une tour de maintien et de levage 21 mobile reposant sur un support de tour 22 comprenant un châssis multi-roues 23.

La tour 21 est une structure rigide en élévation, ouverte à section horizontale en forme de U, de façon à pouvoir contenir à l'intérieur, une partie au moins du pylône 3 en position déployée et de préférence ia totalité du pylône 3 en position rétractée, de sorte que le chariot élévateur 24 en bout de course au sommet 28 de la tour 21 arrive au moins en sous-face de la nacelle renfermant le moteur générateur 2 au sommet de la partie supérieure du pylône 3.

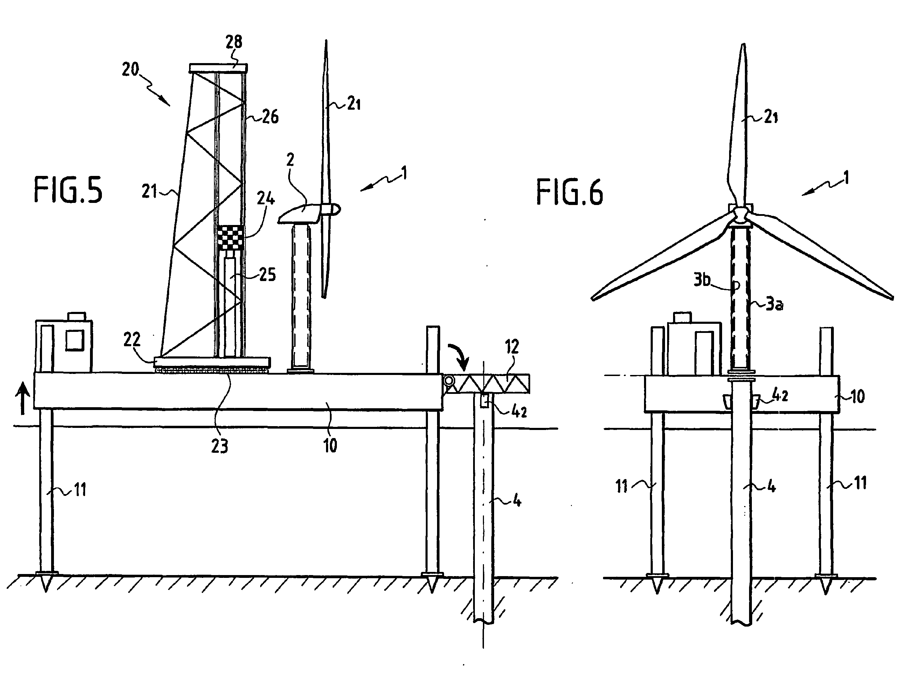

De préférence, pendant toute la phase de transport et d'installation, le rotor de l'éolienne est bloqué dans la position représentée sur la figure 6 et le demi-pylône inférieur 3a présente une hauteur supérieure à la moitié de la longueur des pales 2₁, les deux pales inférieures présentant un angle de 30° par rapport à l'horizontal, pour limiter les interférences entre lesdites pales et les différentes structures de la plateforme.

Le châssis multi-roues 23 comporte, de façon connue, des trains de roues solidaires de systèmes articulés, de sorte que chaque train de roues puisse être animé d'un mouvement vertical indépendant et que, quelle que soit la géométrie du sol, les roues restent en contact avec le sol et transfèrent toujours la même charge. On comprend que le support 22 et le châssis multi-roues 23 présentent une même forme à section horizontale en forme de U comme la tour 21. Le châssis multi-roues 23 est capable de supporter une charge considérable en répartissant ladite charge de manière sensiblement isostatique sur l'ensemble des roues, donc sur le sol de roulage constitué par le pont de la plateforme 10.

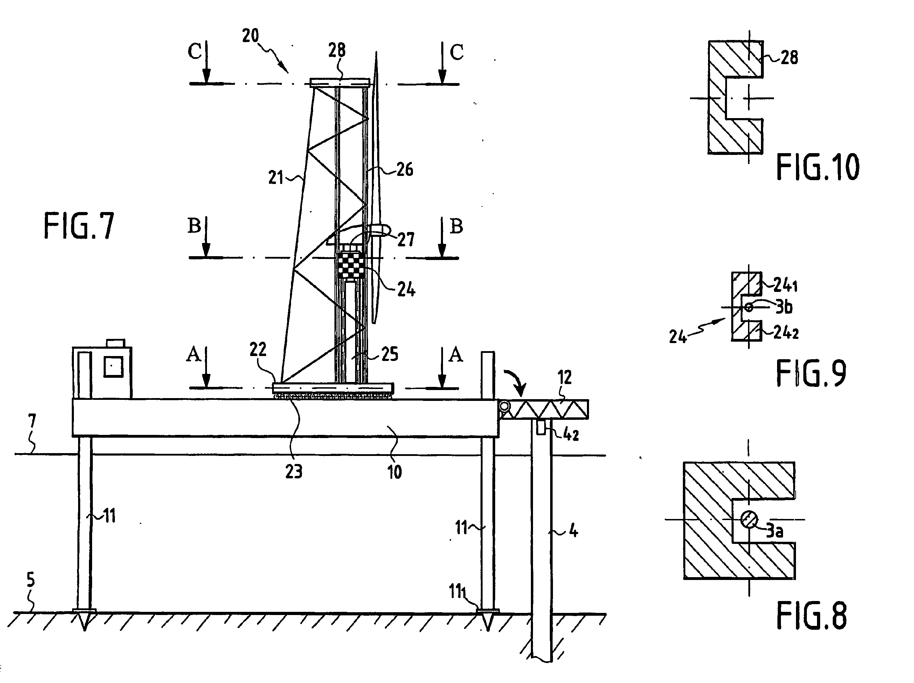

Le dispositif de déplacement et de levage 20 peut être déplacé par roulement du châssis multi-roues 23 jusqu'à ce que le pylône 3 soit sensiblement au centre de l'espace vide défini par la structure en élévation 21 et son support 22, tous les deux étant à section horizontale en forme de U comme représenté sur les figures 5 et 7. Sur la figure 10, on a représenté la couronne 28 à section horizontale en forme de U au sommet de la tour 21.

La figure 6 est une vue de face correspondant à la figure 5 dans laquelle, pour plus de clarté, on a omis de représenter le dispositif de déplacement et de levage 20 ainsi que la passerelle 12 en position rabattue.

Lorsque l'éolienne 1 et son pylône 3 sont placés au centre du dispositif de déplacement et de levage 20 et encadrés par celui-ci, la tour 21 assure le guidage et le maintien en position verticale du pylône 3. Mais, la tour 21 assure en outre le support d'un chariot élévateur 24 comportant également 2 branches 24₁ et 24₂ formant les 2 branches d'un U (fig.9) au centre duquel peut être contenu le pylône 3, c'est-à-dire que lesdites branches 24₁ et 24₂ sont espacées d'une distance supérieure au diamètre du demi-pylône inférieur 3a.

Le chariot élévateur 24 peut être déplacé verticalement à l'intérieur de la structure en élévation constitutive de la tour 21, le long de rails de guidage vertical 26 supportés par la tour 21.

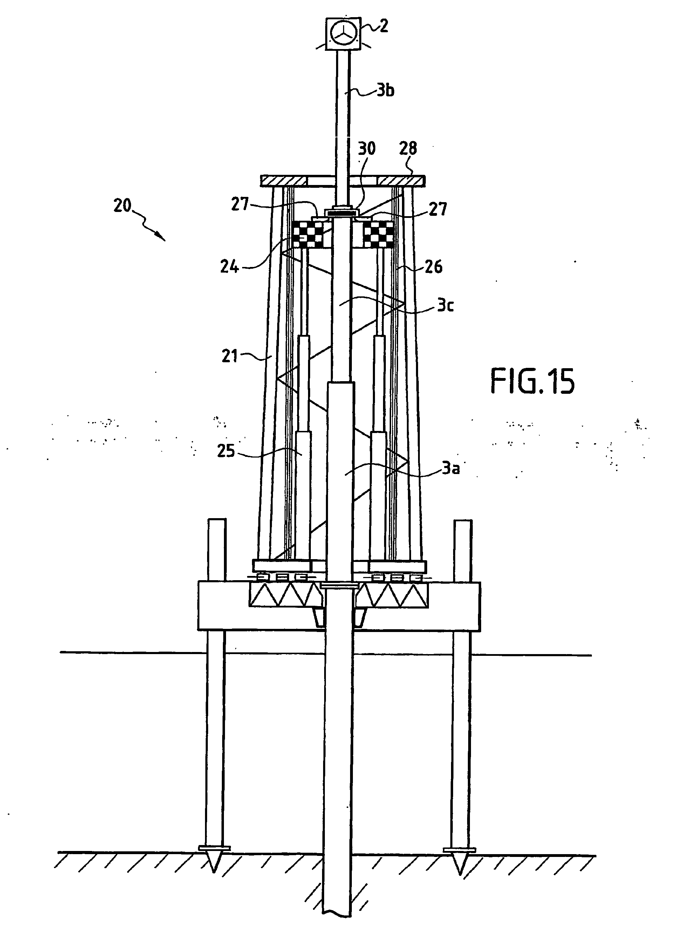

Le chariot 24 est équipé de moyens de préhension 27, de préférence par pincement, aptes à bloquer et saisir le pylône 3 une fois celui-ci logé entre ses branches de chariot 24₁ et 24₂. Ces moyens de pincement sont notamment des coins mobiles 27 supportés par lesdites branches de chariot 24₁ et 24₂ aptes à être actionnés et déplacés horizontalement relativement aux dites branches de chariot 24₁ et 24₂ notamment par des vérins non représentés. Le chariot 24 peut à l'aide desdits coins 27 saisir le pylône 3 lorsque les coins 28 viennent se bloquer contre la paroi tubulaire constitutive du pylône 3. Les coins 27 en position d'extension peuvent également coopérer avec une bride ou un collier périphérique 30 entourant la paroi tubulaire du pylône 3 et les coins mobiles 27 en extension peuvent venir buter en sous-face de ladite bride ou collier 30 et ainsi soulever l'élément tubulaire de pylône 3 par élévation du chariot élévateur 24, tel que représenté sur la figure 15.

La passerelle 12 en bout de plateforme auto-élévatrice 10 comporte elle aussi une forme ouverte à section horizontale en forme de U comme le support 22 et le châssis multi-roues 23, de manière à ce qu'elle puisse encadrer le pieu de fondation 4 lorsque ladite passerelle 12 est déplacée, notamment par pivotement et rabattement, de manière à ce que son extrémité libre repose sur les corbeaux 4₂ et qu'elle puisse supporter le support 22 et le châssis multi-roues 23 quand il est déplacé dessus la passerelle.

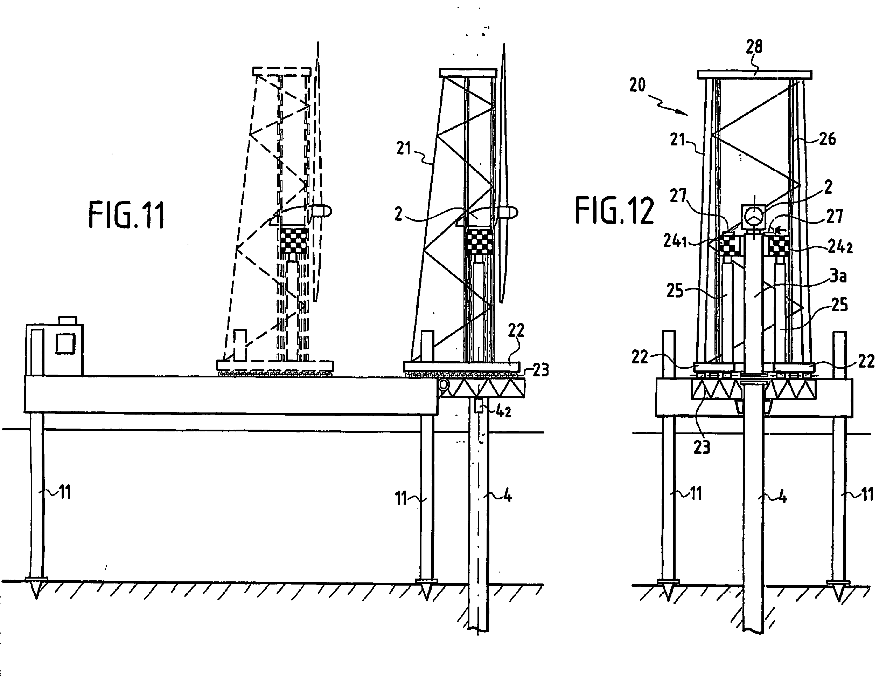

L'éolienne 1 et son pylône 3 sont soulevés de quelques décimètres au-dessus du pont de la plateforme auto-élévatrice 10, puis le châssis multi-roues 23 est déplacé vers le monopieu 4 jusqu'à ce que l'axe dudit pylône 3 corresponde sensiblement à l'axe dudit monopieu 4. Une fois que le demi pylône inférieur 3a est positionné dans l'axe du pieu de fondation 4, comme représenté sur la figure 11, on le descend à l'aide du chariot élévateur de sorte que sa platine inférieure 3₁ repose sur la platine supérieure 4₁ dudit pieu de fondation 4.

Le déploiement vertical du pylône 3 par levage du demi pylône supérieur 3b coulissant à l'intérieur du demi-pylône inférieur 3a au sein duquel il était en position rétractée est montré sur les figures 12 à 14.

Le chariot 24 est en position telle que les coins mobiles 27 puissent être déplacés en extension horizontale et venir bloquer l'extrémité supérieure du demi pylône supérieur 3b dépassant au-dessus du demi pylône inférieur 3a, doit simplement venir s'engager sous un collier ou une bride périphérique à l'extrémité supérieure du demi pylône 3b de manière à pouvoir venir la pousser en sous-face et ainsi soulever l'extrémité supérieure 3b lorsque le chariot est en élévation, soit encore les coins mobiles 27 sont engagés dessous la nacelle 2 solidaire de l'extrémité supérieure du demi-pylône supérieur 3b. Ensuite, le chariot élévateur est déplacé verticalement vers le haut, actionné en poussée par, de préférence, au moins deux vérins hydrauliques 25.

Sur la figure 12, un coin mobile 27 est représenté en position rétractée sur la gauche, et en position d'extension sur la droite. L'extrémité supérieure du demi pylône supérieur 3b peut comporter une bride ou un collier périphérique 30 de sorte que les coins mobiles 27 en position d'extension peuvent en poussant en sous-face de la bride 30, soulever le pylône.

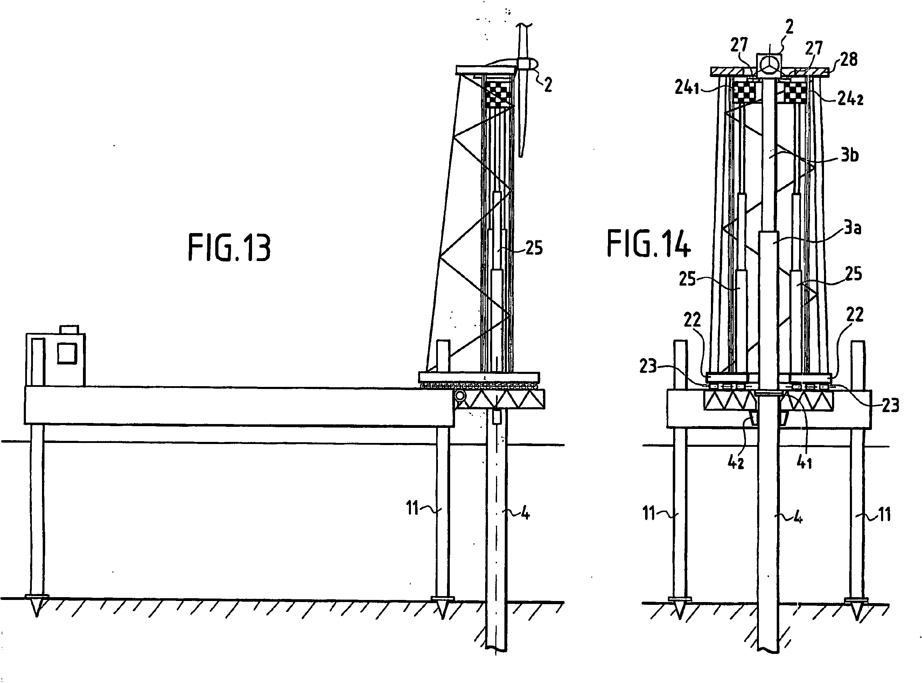

Sur les figures 12 et 14, on a représenté les coins mobiles 27 en position d'extension qui coopèrent avec la sous-face de la nacelle contenant le moteur 2 au sommet de la partie supérieure 3b du pylône.

Le levage du demi pylône supérieur 3b est montré sur la figure 12 dans laquelle, pour plus de clarté, on a omis de représenter les pales du rotor de l'éolienne.

Le figure 12 montre en vue de face le dispositif de déplacement et levage 20 comportant le châssis multi-roues 23 roulant sur le pont de la plateforme auto-élévatrice 10, supportant la structure rigide de la tour 21 ainsi que les rails de guidage vertical 26 supportés par ladite structure rigide. Le chariot élévateur 24 peut se déplacer au sein des rails de guidage 26 actionnés par deux vérins 25, de préférence synchronisés et surmontés des coins mobiles 27 actionnés par des vérins non représentés.

En phase d'approche du dispositif de déplacement et levage 20 vers le pylône 3 représentée sur la figure 7, le chariot élévateur 24 se trouve en regard et en sous-face de la nacelle contenant le moteur 2 de l'éolienne.

Les coins mobiles 27 sont actionnés pour se trouver engagés sous la nacelle 2 ou une bride ou collier 30 à l'extrémité supérieure du demi pylône inférieur 3a. Les vérins 25 du chariot élévateur 24 sont ensuite actionnés de manière synchronisée, afin d'effectuer le levage simultané du pylône 3 et la nacelle contenant le moteur 2, de quelques décimètres au-dessus du pont de la plateforme auto-élévatrice 10. Le châssis multi-roues 23 est alors libre de se déplacer vers l'axe du monopieu 4 tel que déjà montré sur les figures 8 et 9, et ainsi de transporter l'éolienne 1 et son pylône 3. En actionnant les vérins 25 vers le bas, la platine inférieure 3₁ à la base du pylône 3 est alors déposée sur la platine supérieure 4₁ du monopieu 4, ces 2 dernières étant alors solidarisées par boulonnage ou par soudage. Les vérins 25 du chariot 24 sont alors actionnés vers le haut et soulèvent par poussée de la nacelle 2 ou bride ou collier 30 à l'extrémité supérieure du demi pylône supérieur 3b, la partie supérieure 3b du pylône coulissant à l'intérieur de la partie inférieure 3a du pylône, comme représenté sur la figure 11, jusqu'à atteindre l'altitude maximale correspondant sensiblement à la longueur de la partie supérieure 3b du pylône coulissant à l'intérieur de la partie inférieure 3a du pylône.

Dans cette position, les parties supérieure 3b et inférieure 3a du pylône sont solidarisées, par exemple par soudure. Les coins mobiles 27 peuvent être dégagés et le chariot élévateur 24 peut être rabaissé. Le dispositif de déplacement et levage 20 est alors ramené sur le pont de la plateforme auto-élévatrice 10.

Sur la figure 15, on a représenté une vue de face d'un pylône télescopique à trois éléments tubulaires coulissants en phase finale d'élévation. Le pylône 3 comporte un élément tubulaire inférieur 3a à l'intérieur duquel coulisse un élément tubulaire intermédiaire 3c, à l'intérieur duquel coulisse également à son tour, un élément tubulaire supérieur 3b du pylône . L'ensemble étant en position rétractée comme représenté sur la figure 9, le chariot élévateur 24 se positionne au niveau de l'extrémité supérieure dudit élément tubulaire supérieur 3b du pylône qui dépasse des éléments tubulaires intermédiaire et inférieure 3c et 3a du pylône en position rétractée. Les coins mobiles 27 sont alors engagés en extension entre l'extrémité supérieure dudit élément tubulaire supérieur 3a dépassant du pylône rétracté, par exemple en sous-face de la nacelle contenant le moteur ou d'une bride non représentée, et soulève l'extrémité supérieure du pylône et la nacelle 2. Une fois en position haute, c'est-à-dire après élévation d'une hauteur correspondant à la hauteur de ladite partie supérieure tubulaire 3b du pylône , on solidarise la base dudit élément tubulaire supérieur 3b du pylône, par exemple par soudage, avec la partie haute dudit élément tubulaire intermédiaire 3c du pylône dépassant du reste du pylône en position rétractée (éléments tubulaires intermédiaire 3c et inférieur 3a du pylône ). Les coins mobiles 27 peuvent alors être désengagés et le chariot mobile 24 peut être redescendu jusque dessous le collier ou bride 30 solidaire de l'extrémité supérieure de l'élément tubulaire intermédiaire 3c dépassant dudit élément tubulaire inférieur 3a du pylône en position rétractée. Les coins mobiles 27 sont alors actionnés pour être amenés en position d'extension et coopérer avec ledit collier, comme représenté sur la figure 15, poussant celui-ci vers le haut lorsque le chariot remonte et en déployant ainsi ledit élément tubulaire intermédiaire 3c du pylône 3, par actionnement des vérins 25 du chariot 24. Une fois déployée, la base de l'élément tubulaire intermédiaire 3c du pylône est alors solidarisée notamment par soudage, avec l'extrémité supérieure dudit élément tubulaire inférieur 3a du pylône, lui-même solidaire du monopieu de fondation 4.

De la même manière, on pourrait envisager un pylône constitué d'un plus grand nombre d'éléments tubulaires coulissant les uns dans les autres et déployés de manière séquentielle, de même manière qu'explicité ci-dessus, c'est-à-dire en commençant par la partie la plus intérieure, donc la plus haute une fois déployée pour poursuivre avec la partie de diamètre immédiatement supérieure.

Sur la figure 15, la tour 21 n'arrive pas entièrement jusqu'au sommet du pylône 3 déployé mais recouvre seulement les deux éléments tubulaires inférieur 3a et intermédiaire 3c du pylône et une partie de l'élément tubulaire supérieur 3b une fois celui-ci déployé.

En effet, la hauteur utile de la tour 21 correspond à la hauteur la plus haute que le chariot doit atteindre pour que l'élément tubulaire supérieur 3b soit complètement déployé par rapport à un dit élément tubulaire intermédiaire 3c et audit élément tubulaire inférieur 3a, ce dernier étant en position rétractée et ledit élément tubulaire intermédiaire 3c dépassant dudit élément tubulaire inférieur 3a, ou pour que le collier 30 à l'extrémité supérieure dudit élément tubulaire intermédiaire 3c soit élevé au maximum dans l'étape subséquente de coulissement dudit élément tubulaire intermédiaire 3c par rapport au dit élément tubulaire inférieur 3a du pylône.

Si le pylône 3 comporte n éléments tubulaires coulissants, la hauteur de la tour 21 doit être égale à au moins la hauteur dudit élément tubulaire inférieur 3a de plus grand diamètre, additionnée de la hauteur du plus grand autre élément tubulaire coulissant du pylône 3.

Sur les figures 1 à 14, on a représenté un pylône avec seulement deux éléments tubulaires coulissants pour simplifier les explications. Toutefois, le mode de réalisation de la figure 15 avec trois éléments tubulaires coulissants est le mode préféré car il permet de mettre en oeuvre une tour de maintien et de levage 21 de hauteur réduite par rapport à la hauteur de la tour nécessaire si un pylône déployé de même hauteur ne comportait que deux éléments tubulaires coulissants.

L'objectif de la présente invention étant de faciliter les opérations de transport et d'installation et construction de l'éolienne offshore, on comprend qu'il est avantageux de mettre en oeuvre une tour de maintien et de levage 21 de hauteur la plus petite possible.

Le support de tour 22 a été décrit en association avec un chassis multi-roues 23, mais on reste dans l'esprit de l'invention en susbstituant audit châssis multi-roues un dispositif de palier hydrostatique plan consistant en une chambre constituée .d'une simple plaque à la périphérie de laquelle est ajustée un joint souple. L'injection d'air ou de préférence d'eau sous pression, crée une force considérable dirigée vers le haut, proportionelle à la pression et à la surface de ladite plaque, qui soulève alors l'ensemble de la tour. Des fuites, volontairement crées au niveau des joints périphériques, annulent alors pratiquement les frottements vis à vis du sol et facilitent ainsi le déplacement de l'ensemble constitué de la tour chargée du pylône et de la nacelle à mettre en place. A titre d'exemple, une pression de 20 bars appliquée sur une surface de 1 m² engendre une force de soulèvement de 200 tonnes.

Des éléments de guidage latéral solidaires de la plate-forme sont avantageusement rajoutés pour maintenir l'ensemble dans une trajectoire prédéfinie, lors de l'opération de transfert de la charge vers l'axe du pieu de fondation 4.

Sur la figure 4 on a représenté deux éoliennes, sécurisées par un haubanage non représenté, de part et d'autre de la tour 20, l'éolienne 1 b étant en position inversée par rapport à l'éolienne 1a. En effet, en fin d'installation de l'éolienne 1a, la tour 20 est ramenée sur la plateforme auto-élévatrice, puis la plate-forme est positionnée près du prochain site, en position haute face à un pieu de fondation similaire 4. La tour 20 fait alors un demi-tour sur elle-même autour de son axe vertical, puis s'insère autour de l'éolienne 1 b, la soulève de quelques décimètres, puis effectue de nouveau un demi-tour sur elle-même pour se retrouver enfin dans la position décrite en figure 7, prête à effectuer l'ensemble des tâches décrites précédemment en détails, dans le cas de l'éolienne 1a.

Les moyens de levage du chariot 24 de la tour 20 ont été décrits comme étant des vérins hydrauliques, mais on reste dans l'esprit de l'invention si l'on considère des moyens de levage de type vérins mécaniques à vis, de type ensemble pignon-crémaillère, ou encore de type câble-poulie, comme dans les systèmes d'ascenseur.

Le pylône télescopique a été décrit comme étant constitué d'éléments cylindriques rentrés les uns dans les autres, mais on reste dans l'esprit de l'invention en considérant des éléments coniques, le sommet de chacun des cônes étant situé vers le haut. On entend donc par «éléments tubulaires» des éléments cylindriques ou coniques, dont l'angle au sommet est de préférence inférieur à 5°, et de préférence encore inférieur à 2°.

De la même manière, on a décrit des éléments tubulaires pleins mais on reste dans l'esprit de l'invention en considérant des éléments tubulaires ajourés constitués de structures de type treillis. Un pylône de type treillis métallique présente l'avantage de supprimer radicalement les risques de phénomènes de vortex rencontrés avec les pylônes à structure pleine, lorsque ces derniers sont soumis à des vents violents, lesdits vortex pouvant conduire à des phénomènes de résonance pouvant eux-mêmes conduire à la ruine de l'ouvrage.

## Revendications

1. Procédé d'installation en mer d'une éolienne (1) comprenant un pylône télescopique (3, 3a-3c) comprenant au moins deux éléments tubulaires coaxiaux coulissants (3a, 3b), ledit pylône étant apte à adopter une configuration rétractée dans laquelle un élément tubulaire supérieur (3b) de plus petit diamètre est emboîté au moins en partie dans le (ou les) autre(s) élément(s) tubulaire(s) (3c, 3a) de pylône de plus grand(s) diamètre(s), et une configuration déployée dans laquelle lesdits éléments tubulaires (3a, 3b, 3c) de pylône sont désemboîtés par coulissement de manière à ce que seule la partie inférieure de chacun desdits éléments tubulaires de pylône soit recouverte par la partie supérieure de l'élément tubulaire de pylône de plus grand diamètre, ledit élément tubulaire supérieur (3b) de plus petit diamètre supportant à son sommet un moteur à vent (2, 2₁, 2₂), le procédé comprenant les étapes successives suivantes dans lesquelles :
1) on transporte jusqu'à un site d'installation en mer ladite éolienne (1), ledit pylône étant en configuration rétractée, sur une plateforme flottante auto-élévatrice (10), ladite plateforme (10) supportant également un dispositif de déplacement et de levage (20) de l'éolienne (1) comprenant une tour mobile (21) apte à se déplacer sur ladite plateforme et comprenant des moyens de levage (24-27) aptes à saisir et déplacer verticalement ledit pylône et déployer ledit pylône télescopique (3) depuis sa dite configuration rétractée jusqu'à sa dite configuration déployée, ledit site d'installation en mer de ladite éolienne comprenant un pieu de fondation (4) installé au fond de la mer (5) et dont de préférence, le sommet émerge au-dessus du niveau de l'eau (7), et
2) une fois arrivé à proximité dudit pieu de fondation (4), on surélève ladite plateforme auto-élévatrice (10) par rapport au niveau de la mer (7) et on lui assure une position fixe par rapport au sol marin (5), et
3) on déplace ladite éolienne avec ledit pylône en configuration rétractée jusqu'à ce que la base du pylône (3) soit dans l'axe dudit pieu de fondation (4), par déplacement sur ladite plateforme dudit dispositif de déplacement et de levage (20), puis on solidarise la base dudit pylône (3) avec le sommet dudit pieu de fondation (4), et
4) on déploie ledit pylône (3) depuis sa dite configuration rétractée jusqu'à sa dite configuration déployée à l'aide dudit dispositif de déplacement et de levage (20), ledit dispositif de déplacement et de levage (20) comprenant une tour mobile (21) constituée d'une structure rigide à section horizontale en forme de U, apte à contenir ledit pylône (3) entre les deux branches du U, et présentant une hauteur au moins égale à la hauteur dudit pylône télescopique (3) en configuration rétractée.

2. Procédé selon la revendication 1, **caractérisé en ce que** ladite tour mobile (21) présente une hauteur inférieure à la hauteur dudit pylône télescopique (3) en configuration déployée.

3. Procédé selon la revendication 1 ou 2, **caractérisé en ce que** ladite tour (21) présente une hauteur inférieure à la hauteur de l'élément tubulaire de pylône inférieur (3a) de plus grand diamètre ajoutée à celle d'un autre élément tubulaire de pylône (3b ou 3c) correspondant à l'élément tubulaire du pylône de plus grande longueur.

4. Procédé selon l'une des revendications 1 à 3, **caractérisé en ce que** ledit dispositif de déplacement et de levage (20) comprend des moyens de levage (24-27) comprenant un chariot élévateur (24) guidé verticalement par des rails de guidage (26) supportés par ladite tour (21), ledit chariot élévateur pouvant se déplacer verticalement le long de ladite tour (21), ledit chariot élévateur supportant des moyens de préhension (27) aptes à saisir ledit pylône télescopique (3).

5. Procédé selon la revendication 4, **caractérisé en ce que** lesdits moyens de préhension (27) sont aptes à saisir ledit pylône (3) au niveau de la partie supérieure de chacun desdits éléments tubulaires de pylône (3a-3c), et ledit chariot (24) est apte à être déplacé verticalement à l'aide de moyens de poussée hydraulique (25) tels que des vérins, de façon à soulever ledit pylône ou de façon à déployer lesdits éléments tubulaires de pylône en les soulevant par poussée.

6. Procédé selon l'une des revendications 4 ou 5, **caractérisé en ce que** lesdits moyens de préhension (27) sont constitués par des coins mobiles pouvant se déplacer dans une direction horizontale, et aptes à soulever lesdits éléments tubulaires de pylône lorsque l'on déplace verticalement ledit chariot élévateur (24.)

7. Procédé selon l'une des revendications 1 à 6, **caractérisé en ce que** ledit pieu de fondation (4) est mis en place par battage, forage ou fonçage, ou ledit pieu de fondation (4) comporte une embase gravitaire (6₁) reposant sur le fond de la mer (5), ou ledit pieu de fondation (4) comporte une structure d'ancrage (6₂, 6₃) permettant son ancrage dans le fond de la mer (5).

8. Procédé selon l'une des revendications précédentes, **caractérisé en ce que** lesdits moyens de levage (24) comprennent des moyens de poussée hydraulique du type vérin (25).

9. Procédé selon l'une des revendications 1 à 8, **caractérisé en ce qu'**à l'étape 3), on réalise les opérations suivantes dans lesquelles :
a) on déplace ladite éolienne (1) en configuration rétractée à l'aide dudit dispositif de déplacement et de levage (20) jusqu'à atteindre une position où ledit pylône télescopique (3) est dans l'axe dudit pieu de fondation (4) et,
b) on descend ladite éolienne en configuration rétractée à l'aide dudit dispositif de déplacement et de levage (20) jusqu'à ce que la base (3₁) dudit pylône télescopique en configuration rétractée repose sur le sommet (4₁) dudit pieu de fondation (4), et
c) on solidarise, de préférence par soudage ou boulonnage, la base (3₁) dudit pylône (3) sur le sommet (4₁) dudit pieu de fondation (4), et
d) on déploie l'élément tubulaire supérieur de plus petit diamètre (3b) dudit pylône à l'aide desdits moyens de levage (24-27), lesdits moyens de levage coopérant avec ledit élément tubulaire supérieur (3b) de pylône au niveau de sa partie supérieure dépassant des autres dits éléments tubulaires de pylône (3a, 3c) dans lesquels ledit élément tubulaire supérieur (3b) est emboîté en configuration rétractée du pylône télescopique (3), et
e) on solidarise la base dudit élément tubulaire supérieur (3b) du pylône avec la partie supérieure d'un élément tubulaire intermédiaire (3c) ou de l'élément tubulaire inférieur (3a) à l'intérieur duquel ledit élément tubulaire supérieur (3b) a coulissé pour être déployé, et
f) le cas échéant, on déploie ledit élément tubulaire intermédiaire (3c) de diamètre supérieur à l'intérieur duquel ledit élément tubulaire supérieur (3b) a coulissé, à l'aide desdits moyens de levage (24-27) coopérant avec la partie supérieure dudit élément tubulaire intermédiaire (3c), en soulevant ainsi ledit élément tubulaire supérieur (3b) et ledit moteur à vent (2, 2₁, 2₂) qui lui est solidaire, et
g) le cas échéant, on solidarise la base d'un dit élément tubulaire intermédiaire (3c) avec la partie supérieure d'un autre élément tubulaire intermédiaire de diamètre supérieur, à l'intérieur duquel ledit premier élément tubulaire intermédiaire a coulissé, et
h) le cas échéant, on réitère l'étape g) autant de fois qu'il y a d'éléments tubulaires intermédiaires constitutifs (3c) dudit pylône télescopique (3), et
i) on solidarise la base de l'élément tubulaire intermédiaire (3c) de plus grand diamètre avec la partie supérieure de l'élément tubulaire inférieur (3a) à l'intérieur duquel ledit élément tubulaire intermédiaire (3c) a coulissé.

10. Procédé selon la revendication 9, **caractérisé en ce que** lesdits éléments tubulaires intermédiaires (3c) de pylône comportent à leur extrémité supérieure un collier ou une bride périphérique (30), et lesdits moyens de levage (24-27) soulèvent lesdits éléments tubulaires intermédiaires (3c) par poussage en sous-face de ladite bride ou dit collier (30) à l'aide desdits moyens de préhension (27) consistant en des coins mobiles à déplacement horizontal, lesdits coins (27) pouvant être engagés dessous ledit collier ou bride (30), et pouvant être déplacés verticalement vers le haut par ledit chariot élévateur (24).

## Claims

1. A method of installing a wind turbine (1) at sea, the turbine including a telescopic pylon (3, 3a-3c) comprising at least two slidable coaxial tubular elements (3a, 3b), said pylon being suitable for adopting a retracted configuration in which a top tubular element (3b) of smaller diameter is engaged at least in part in the other, larger-diameter tubular pylon element(s) (3c, 3a), and a deployed configuration in which said tubular pylon elements (3a, 3b, 3c) are slidably disengaged so that only the bottom portion of each tubular pylon element is covered by the top portion of the tubular pylon element of greater diameter, said smallest-diameter top tubular element (3b) supporting at its top a wind engine (2, 2₁, 2₂), the method comprising the following successive steps:
1) transporting said wind turbine (1) to an installation site at sea, said pylon being in the retracted configuration on a self-jacking floating platform (10), said platform (10) also supporting a device (20) for moving and lifting the wind turbine (1), the device comprising a movable tower (21) suitable for moving on said platform and including lift means (24-27) suitable for taking hold of said pylon and moving it vertically to deploy said telescopic pylon (3) from its said retracted configuration to its said deployed configuration, said site for installation at sea of said wind turbine including a foundation pile (4) installed on the sea bottom (5) and preferably having its top emerging above the water level (7); and
2) once arrived in the proximity of said foundation pile (4), raising said self-jacking platform (10) above the level of the sea (7) while ensuring that it remains in a position that is stationary relative to the sea bed (5); and
3) moving said wind turbine with said pylon in the retracted configuration until the base of the pylon (3) lies on the axis of said foundation pile (4) by moving said device (20) for moving and lifting the wind turbine on said platform, and then securing the base of said pylon (3) to the top of said foundation pile (4); and
4) deploying said pylon (3) from its said retracted configuration to its said deployed configuration using said device (20) for moving and lifting the wind turbine, said device (20) comprising a movable tower (21) constituted by a rigid structure of U-shaped horizontal section that is suitable for containing said pylon (3) between the two branches of its U-shape, and presenting a height that is not less than the height of said telescopic pylon (3) in the retracted configuration.

2. A method according to claim 1, **characterized in that** said movable tower (21) presents a height that is less than the height of said telescopic pylon (3) in the deployed configuration.

3. A method according to claim 1 or claim 2, **characterized in that** said tower (21) presents a height that is less than the height of the bottom tubular pylon element (3a) of greatest diameter plus the height of another tubular pylon element (3b or 3c) corresponding to the tubular pylon element of greatest length.

4. A method according to any one of claims 1 to 3, **characterized in that** said device (20) for moving and lifting the wind turbine comprises lift means (24-27) comprising an elevator carriage (24) that is vertically guided by guide rails (26) supported by said tower (21), said elevator carriage being capable of moving vertically along said tower (21), said elevator carriage including gripper means (27) suitable for taking hold of said telescopic pylon (3).

5. A method according to claim 4, **characterized in that** said gripper means (27) are suitable for taking hold of said pylon (3) at the top portion of each of said tubular pylon elements (3a-3c), and said carriage (24) is suitable for being moved vertically with the help of hydraulic thrust means (25) such as actuators so as to raise said pylon and so as to deploy said tubular pylon elements by raising them by thrust.

6. A method according to claim 4 or claim 5, **characterized in that** said gripper means (27) are constituted by movable wedges capable of moving in a horizontal direction and suitable for raising said tubular pylon elements when said elevator carriage (24) is moved vertically.

7. A method according to any one of claims 1 to 6, **characterized in that** said foundation pile (4) is put into place by hammering, drilling, or driving, or said foundation pile (4) includes a gravity base (6₁) resting on the sea bottom (5), or said foundation pile (4) includes an anchor structure (6₂, 6₃) enabling it to be anchored to the sea bottom (5).

8. A method according to any preceding claim, **characterized in that** said lift means (24) comprise hydraulic thrust means of the actuator type (25).

9. A method according to any one of claims 1 to 8, **characterized in that** in step 3), the following successive operations are performed:
a) moving said wind turbine (1) in the retracted configuration by means of said device (20) for moving and lifting the wind turbine until it reaches a position in which said telescopic pylon (3) is on the axis of said foundation pile (4); and
b) lowering said wind turbine in the retracted configuration by means of said device (20) for moving and lifting the wind turbine until the base (3₁) of said telescopic pylon in the retracted configuration is resting on the top (4₁) of said foundation pile (4); and
c) securing the base (3₁) of said pylon (3) on the top (4₁) of said foundation pile (4), preferably by welding or bolting; and
d) deploying the smallest-diameter top tubular element (3b) of said pylon using said lift means (24-27), said lift means co-operating with said top tubular pylon element (3b) via its own top portion projecting from said other tubular pylon elements (3a, 3c) in which said top tubular element (3b) is engaged in the retracted configuration of the telescopic pylon (3); and
e) securing the base of said top tubular pylon element (3b) to the top portion of an intermediate tubular element (3c) or the bottom tubular element (3a) inside which said top tubular element (3b) has slid in order to be deployed; and
f) where appropriate, deploying said intermediate tubular element (3c) of greater diameter inside which said top tubular element (3b) has slid, using said lift means (24-27) co-operating with the top portion of said intermediate tubular element (3c), thereby raising said top tubular element (3b) and said wind engine (2, 2₁, 2₂) that is secured thereto; and
g) where appropriate, securing the base of a said intermediate tubular element (3c) to the top portion of another intermediate tubular element of greater diameter, inside which said first intermediate tubular element has slid; and
h) where appropriate, repeating step g) as often as there are consecutive intermediate tubular elements (3c) of said telescopic pylon (3); and
i) securing the base of the largest-diameter intermediate tubular element (3c) to the top portion of the bottom tubular element (3a) inside which said intermediate tubular element (3c) has slid.

10. A method according to claim 9, **characterized in that** said intermediate tubular pylon elements (3c) include at their top ends respective peripheral flanges or collars (30), and said lift means (24-27) raise said intermediate tubular elements (3c) by pushing against the underfaces of said flanges or said collars (30) using said gripper means (27) constituted by horizontally-movable wedges, said wedges (27) being suitable for being engaged under said collars or flanges (30), and being capable of being moved vertically upwards by said elevator carriage (24).

## Patentansprüche

1. Verfahren zum Aufstellen einer Windkraftanlage (1) auf See, die einen Teleskopmast (3, 3a-3c) umfassend wenigstens zwei koaxial verschiebliche rohrförmige Elemente (3a, 3b) umfaßt, wobei der Mast in der Lage ist, eine zurückgezogene Konfiguration, bei welcher ein oberes rohrförmiges Element (3b) mit einem kleineren Durchmesser zumindest teilweise in dem (oder den) anderen rohrförmigen Element(en) (3c, 3a) des Mastes mit einem größeren Durchmesser aufgenommen ist, und eine ausgezogene Konfiguration, bei welcher die rohrförmigen Elemente des Mastes durch Verschiebung nicht ineinander aufgenommen sind, derart anzunehmen, daß nur der untere Abschnitt jedes der rohrförmigen Elemente des Mastes von dem oberen Abschnitt des rohrförmigen Elementes des Mastes mit dem größeren Durchmesser bedeckt ist, wobei das oberste rohrförmige Element (3b) mit dem kleinsten Durchmesser auf seiner Spitze eine Windkraftmaschine (2, 2₁, 2₂) lagert, wobei das Verfahren die folgenden aufeinanderfolgenden Schritte umfaßt, in welchen:
1) man die Windkraftanlage (1) bis zu einem Aufstellort auf See transportiert, wobei der Mast in der zurückgezogenen Konfiguration auf einer selbsthebenden Schwimmplattform (10) ist, wobei die Plattform (10) auch eine Vorrichtung zum Bewegen und Heben (20) der Windkraftanlage (1) trägt, die einen beweglichen Turm (21), der in der Lage ist sich auf der Plattform zu bewegen, und Mittel zum Heben (24-27), die in der Lage sind den Mast zu greifen und vertikal zu bewegen und den Teleskopmast (3) von seiner zurückgezogenen Konfiguration bis zu seiner ausgezogenen Konfiguration auszuziehen, umfaßt, wobei der Aufstellort auf See einen auf dem Meeresgrund (5) angeordneten Fundamentspfahl (4) umfaßt, wobei dessen Spitze vorzugsweise über dem Wasserspiegel (7) liegt, und
2) wenn man in der Nähe des Fundamentspfahls (4) angekommen ist, man die selbsthebende Plattform (10) bezüglich des Meeresspiegels (7) hebt und eine feste Position selbiger bezüglich des Meeresgrundes (5) sicherstellt und
3) man die Windkraftanlage mit dem Mast in der zurückgezogenen Position durch Bewegung auf der Plattform der Vorrichtung zum Bewegen und zum Heben (20) bewegt, bis der Sockel des Mastes (3) auf der Achse des Fundamentspfahls (4) liegt, und man anschließend den Sockel des Mastes (3) mit der Spitze des Fundamentspfahls (4) verbindet, und
4) man den Mast (3) von seiner zurückgezogenen Konfiguration bis zu seiner auseinandergezogenen Konfiguration mit Hilfe der Vorrichtung zum Bewegen und Heben (20) auszieht, wobei die Vorrichtung zum Bewegen und Heben (20) einen beweglichen Turm (21) umfaßt, der aus einer festen Struktur mit einem horizontalen U-förmigen Querschnitt besteht, der in der Lage ist, den Mast (3) zwischen den zwei Schenkeln des U zu enthalten, und der eine Höhe aufweist, die zumindest gleich die Höhe des Teleskopmastes (3) in der zurückgezogenen Konfiguration ist.

2. Verfahren nach Anspruch 1, **dadurch gekennzeichnet, daß** der bewegliche Turm (21) eine niedrigere Höhe aufweist als die Höhe des Teleskopmastes (3) in der zurückgezogenen Konfiguration.

3. Verfahren nach Anspruch 1 oder 2, **dadurch gekennzeichnet, daß** der Turm (21) eine niedrigere Höhe aufweist als die Höhe des untersten rohrförmigen Elementes des Mastes (3a) mit dem größten Durchmesser zusammen mit der eines anderen rohrförmigen Elementes des Mastes (3b oder 3c), das dem rohrförmigen Element des Mastes mit der größten Länge entspricht.

4. Verfahren nach einem der Ansprüche 1 bis 3, **dadurch gekennzeichnet, daß** die Vorrichtung zum Bewegen und Heben (20) Mittel zum Heben (24-27) umfaßt, die einen Hubwagen (24) umfassen, der vertikal von Führungsschienen (26) geführt wird, die von dem Turm (21) getragen werden, wobei der Hubwagen in der Lage ist, sich vertikal entlang des Turmes (21) zu bewegen und wobei der Hubwagen Mittel zum Greifen (27) trägt, die zum Greifen des Teleskopmastes (3) geeignet sind.

5. Verfahren nach Anspruch 4, **dadurch gekennzeichnet, daß** die Mittel zum Greifen (27) geeignet sind, den Mast (3) auf Höhe des oberen Abschnittes jeder der rohrförmigen Elemente (3a-3c) des Mastes zu greifen, und der Wagen (24) geeignet ist, vertikal mit Hilfe von hydraulischen Schubmitteln (25) wie z.B. einem Zylinder derart bewegt zu werden, daß der Mast gehoben wird oder daß die rohrförmigen Elemente des Mastes mittels Heben durch Schieben ausgezogen werden.

6. Verfahren nach einem der Ansprüche 4 oder 5, **dadurch gekennzeichnet, daß** die Mittel zum Greifen (27) aus beweglichen Keilen ausgebildet sind, die sich in einer horizontalen Richtung bewegen können und geeignet sind, die rohrförmigen Elemente des Mastes zu heben, wenn der Hubwagen (24) vertikal bewegt wird.

7. Verfahren nach einem der Ansprüche 1-6, **dadurch gekennzeichnet, daß** der Fundamentspfahl (4) durch Rammen, Bohren oder Im-Boden-Versenken aufgestellt wird oder der Fundamentspfahl (4) einen Schwerkraftsockel (6₁), der auf dem Meeresgrund (5) ruht, umfaßt oder der Fundamentspfahl (4) eine Befestigungsstruktur (6₂, 6₃), die dessen Befestigung am Meeresgrund (5) erlaubt, umfaßt.

8. Verfahren nach einem der vorhergehenden Ansprüche, **dadurch gekennzeichnet, daß** die Mittel zum Heben (24) hydraulische Schubmittel des Zylindertyps (25) umfassen.

9. Verfahren nach einem der Ansprüche 1 bis 8, **dadurch gekennzeichnet, daß** in Schritt 3) folgende Vorgänge durchgeführt werden, in welchen:
a) man die Windkraftanlage (1) in der zurückgezogenen Konfiguration mit Hilfe der Vorrichtung zum Bewegen und Heben (20) bewegt, bis eine Position erreicht wird, wo der Teleskopmast (3) auf der Achse des Fundamentspfahl (4) liegt,
b) man die Windkraftanlage in der zurückgezogenen Konfiguration mit Hilfe der Vorrichtung zum Bewegen und Heben (20) senkt, bis der Sockel (3₁) des Teleskopmastes in der zurückgezogenen Konfiguration auf der Spitze (4₁) des Fundamentspfahls (4) ruht,
c) man vorzugsweise durch Schweißen oder Verschrauben den Sockel (3₁) des Mastes (3) auf der Spitze (4₁) des Fundamentspfahls (4) befestigt,
d) man das oberste rohrförmige Element (3b) des Mastes mit dem kleinsten Durchmesser mit Hilfe der Mittel zum Heben (24-27) auszieht, wobei die Mittel zum Heben mit dem obersten rohrförmigen Element (3b) des Mastes auf Höhe dessen oberen Abschnittes zusammenwirken, der die anderen rohrförmigen Mastelementen (3a, 3c), in welche das oberste rohrförmige Element (3b) in der zurückgezogenen Konfiguration des Teleskopmastes (3) aufgenommen ist, überragt,
e) man den Sockel des obersten rohrförmigen Elementes (3b) des Mastes mit dem oberen Abschnitt eines dazwischen angeordneten rohrförmigen Elementes (3c) oder des untersten rohrförmigen Elementes (3a) befestigt, in welches das oberste rohrförmige Element (3b) zum Ausgezogenwerden zurückgezogen ist,
f) man gegebenenfalls das dazwischen angeordnete rohrförmige Element (3c) mit größerem Durchmesser, in welches das oberste (3b) rohrförmige Element zurückgezogen ist, mit Hilfe der Mittel zum Heben (24-27), die mit dem oberen Abschnitt des dazwischen angeordneten rohrförmigen Elementes (3c) zusammenwirken, auszieht, wobei auch das oberste rohrförmige Element (3b) und die mit demselben befestigte Windkraftmaschine (2, 2₁, 2₂) gehoben werden,
g) man gegebenenfalls den Sockel eines dazwischen angeordneten rohrförmigen Elementes (3c) mit dem oberen Abschnitt eines anderen dazwischen angeordneten rohrförmigen Elementes mit größerem Durchmesser, in welches das erste dazwischen angeordnete rohrförmige Element zurückgezogen ist, befestigt,
h) man gegebenenfalls den Schritt g) wiederholt, so lange noch rohrförmige dazwischen angeordnete Elemente (3c) des Teleskopmastes (3) vorhanden sind, und
i) man befestigt den Sockel des dazwischen angeordneten rohrförmigen Elementes (3c) mit dem größten Durchmesser mit dem oberen Abschnitt des untersten rohrförmigen Elementes (3a), in welches das dazwischen angeordnete rohrförmige Element (3c) zurückgezogen ist.

10. Verfahren nach Anspruch 9, **dadurch gekennzeichnet, daß** die dazwischen angeordneten rohrförmigen Elemente (3c) des Mastes an ihren oberen Enden eine Auskragung oder einen Umfangsflansch (30) umfassen und die Mittel zum Heben (24-27) die dazwischen angeordneten rohrförmigen Elemente (3c) durch Drücken unter dem Flansch oder der Auskragung (30) mit Hilfe der Mittel zum Greifen (27), die aus horizontal beweglichen Keilen bestehen, heben, wobei die Keile (27) unter der Auskragung oder dem Flansch (30) in Eingriff kommen können und vertikal nach oben von Hubwagen (24) bewegt werden können.
